# EUROPEAN PATENT APPLICATION

(11) **EP 4 478 690 A1**
(43) Date of publication of application: **18.12.2024**
(21) Application number: 22927487.3
(22) Date of filing: 22.12.2022
(51) Int. Cl.: H04M 1/02, G06F 1/16, G06N 3/08, G06F 3/0481, G06F 3/044, G06N 3/045

(54) **ELECTRONIC DEVICE COMPRISING FLEXIBLE DISPLAY, AND OPERATING METHOD THEREFOR**

(30) Priority: 16.02.2022 KR 20220020406; 28.06.2022 KR 20220079076
(71) Applicant: Samsung Electronics Co., Ltd., Gyeonggi-do, 16677 (KR)
(72) Inventor: KIM, Sukdong, Suwon-si Gyeonggi-do 16677 (KR); KIM, Kibeom, Suwon-si Gyeonggi-do 16677 (KR); KIM, Taeyeong, Suwon-si Gyeonggi-do 16677 (KR); JO, Donghyun, Suwon-si Gyeonggi-do 16677 (KR); PARK, Jihea, Suwon-si Gyeonggi-do 16677 (KR); LEE, Junghyeob, Suwon-si Gyeonggi-do 16677 (KR)
(74) Representative: Appleyard Lees IP LLP
(86) International application number: PCT/KR2022/021017
(87) International publication number: WO 2023/158091

(57) **Abstract**

An electronic device according to various embodiments of the present disclosure comprises: a first housing; a second housing disposed to be slidably movable with respect to the first housing; a flexible display that is drawn out from or drawn into the first housing on the basis of slide-in or slide-out movement of the second housing, and has a bending area; a current supply circuit (PMIC) for supplying a current to the flexible display; a display circuit for measuring data related to the charge on the surface of the flexible display; at least one processor; and at least one memory operably coupled to the at least one processor, wherein the at least one processor is configured to: check at least one sensing data corresponding to the bending area from among the data of the flexible display provided from the display circuit; and on the basis of the at least one sensing data corresponding to the bending area, output information related to the movement of the flexible display.

## Description

### [Technical Field]

Various embodiments of the disclosure relate to an electronic device including a flexible display, and a method for operating the same.

### [Background Art]

A display using organic light-emitting diodes can provide a larger screen while ensuring the portability of an electronic device. For example, a display using organic light-emitting diodes (or an electronic device equipped with the same) can achieve stable operation even when manufactured to be remarkably thin, and can thus be mounted on the electronic device in a foldable or bendable form or a rollable form.

The rollable form factor is designed to extend a display for web surfing or multimedia functions, and enables organic light-emitting diodes, which can achieve stable operation even when manufactured thin, to be mounted in an electronic device as a foldable, bendable, or rollable flexible display.

In rollable form factors according to the prior art, the active region of a display is variable, so it is necessary to accurately know the current rolled length of the display in order to show a user a UI that fits the current size of the display. Conventionally, for this distance sensing, a separate sensor was used to measure a distance. In particular, mobile form factors have limited mounting space, power constraints, and the need for durability, making it difficult to use a contact sensor device such as a variable resistor.

However, the existing rollable form factor approach has cost-related problems. Specifically, variable resistors specialized for distance sensing cannot be used due to durability problems with contact sensors, and data from general-purpose non-contact sensors are processed to sense distance. These sensors are each expensive. In addition, these sensors are not specialized for distance measurement, and thus four or more multiple sensors are mounted to handle exceptions caused by external magnetic forces or magnetization. Consequently, the unit cost of a product is further increased.

Additionally, the existing rollable form factor approach has space-related problems. In the rollable form factor, the mounting areas of a variable display and a driving unit are large, so the mounting space is insufficient compared to the existing bar-type form factor. Moreover, when there is not enough space to mount a battery and thus mounting areas are reduced in other parts, additional batteries may be mounted, thereby increasing the usage time. However, the existing space is also insufficient to mount multiple sensors and contact materials for distance sensing.

### [Detailed Description of the Invention]

### [Technical Problem]

In order to solve the above problems, various embodiments of the disclosure relate to an electronic device including a flexible display and a method for operating the same, wherein in a rollable form factor, a position at which a display panel is rolled is sensed through the inference by an artificial intelligence (AI) model regarding the amount of charge flowing in the panel without a separate sensor device.

### [Technical Solution]

An electronic device including a flexible display, according to various embodiments of the disclosure, may include a first housing, a second housing disposed to be slidably movable relative to the first housing, a flexible display having a bending region and drawn-out from inside of the first housing or drawn-into the first housing based on a slide-in movement or a slide-out movement of the second housing, a current supply circuit (or, PMIC(Power Management Integrated Circuit)) configured to supply a current to the flexible display, a display circuit configured to measure data related to a charge on a surface of the flexible display, at least one processor, and at least one memory operably connected to the at least one processor, wherein the at least one processor is configured to identify at least one sensing data corresponding to the bending region among the data of the flexible display provided from the display circuit, and output information related to movement of the flexible display based on the at least one sensing data corresponding to the bending region.

An electronic device according to various embodiments of the disclosure may include a first housing, a second housing disposed to be slidably movable relative to the first housing, and a flexible display having a bending region and drawn-out from inside of the first housing or drawn-into the first housing based on a slide-in movement or a slide-out movement of the second housing. A method for operating the electronic device may include receiving data related to a charge of a surface of the flexible display from a display circuit configured to measure the data, identifying at least one sensing data corresponding to the bending region among the data of the flexible display, and outputting information related to movement of the flexible display based on the at least one sensing data corresponding to the bending region.

### [Advantageous Effects]

According to various embodiments of the disclosure, the electronic device including a flexible display and the method for operating the same may reduce costs by not including a distance sensor for measuring the distance moved by the display.

Furthermore, additional space may be secured by not including a distance sensor in the electronic device including a flexible display that requires space for accommodating the display that slides in a housing.

### [Brief Description of Drawings]

FIG. 1 is a block diagram of an electronic device in a network environment according to various embodiments of the disclosure.
FIG. 2A illustrates a state in which a second display region of a display is accommodated in a housing according to various embodiments of the disclosure.
FIG. 2B illustrates a state in which a second display region of a display is exposed to the outside of a housing according to various embodiments of the disclosure.
FIG. 3A is an exploded perspective view of an electronic device according to various embodiments of the disclosure.
FIG. 3B is a cross-sectional view taken along line A-A' in FIG. 2A according to various embodiments of the disclosure.
FIG. 3C is a cross-sectional view taken along line B-B' in FIG. 2B according to various embodiments of the disclosure.
FIG. 4 is a block diagram of an electronic device according to various embodiments of the disclosure.
FIG. 5A is a flowchart of an operation method regarding outputting information related to the movement of an electronic device according to various embodiments of the disclosure.
FIG. 5B is a flowchart of an operation method regarding machine learning training of an electronic device according to various embodiments of the disclosure.
FIG. 6 illustrates charge flow in a touch screen panel according to various embodiments of the disclosure.
FIG. 7 illustrates a charge distribution in a display panel according to various embodiments of the disclosure.
FIG. 8A illustrates a charge distribution in a display panel when a touch occurs according to various embodiments of the disclosure.
FIG. 8B illustrates a charge distribution in a display panel when bending occurs according to various embodiments of the disclosure.
FIG. 9 illustrates charge distribution data of a display panel according to various embodiments of the disclosure.
FIG. 10 sequentially illustrates the process of learning charge distribution data of a display panel according to various embodiments of the disclosure.
FIG. 11 illustrates a graph of prediction error per distance moved by a display panel according to various embodiments of the disclosure.

### [Mode for Carrying out the Invention]

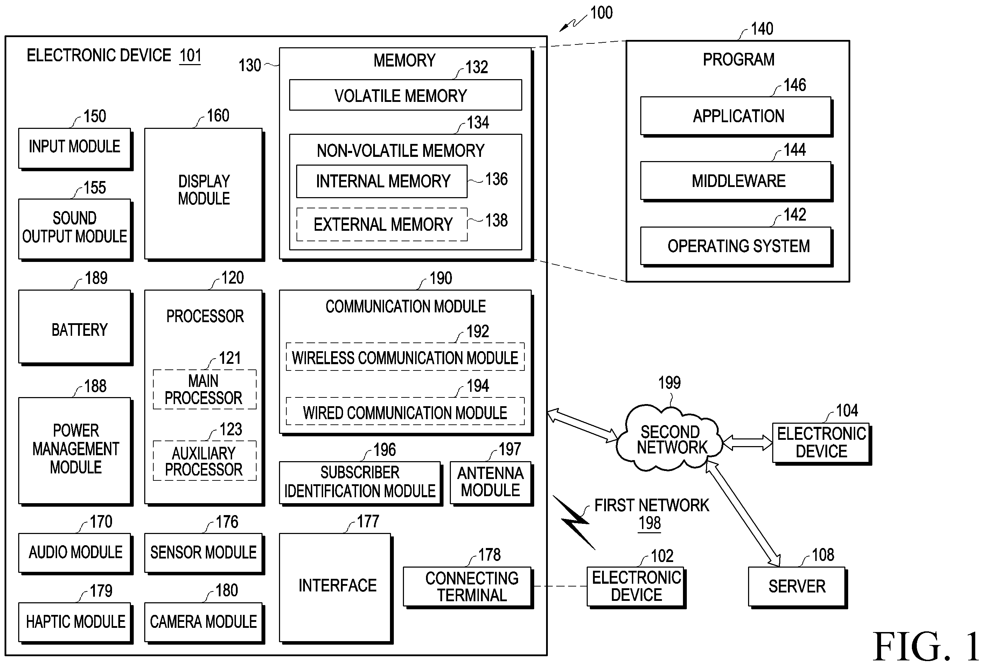

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Hereinafter, various embodiments of an electronic device 200 (e.g., the electronic device 101) described herein are described.

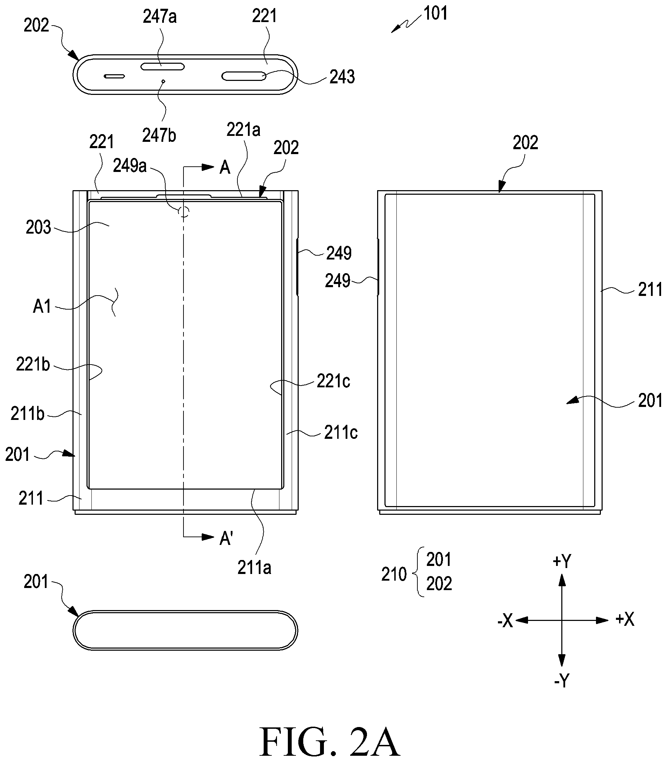

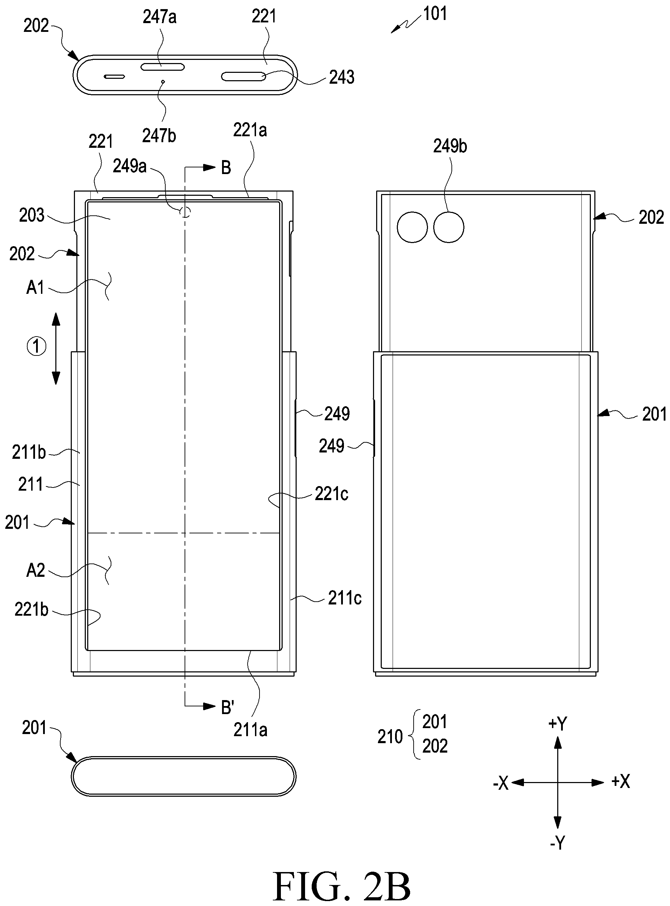

FIG. 2A illustrates a state in which a second display region of a display is accommodated in a housing according to various embodiments of the disclosure. FIG. 2B illustrates a state in which a second display region of a display is exposed to the outside of a housing according to various embodiments of the disclosure.

FIGS. 2A and 2B illustrate a structure in which a display 203 (e.g., a flexible display or a rollable display) extends in a longitudinal direction (e.g., the +Y direction) when viewed from the front surface of the electronic device 101. However, the direction of extension of the display 203 is not limited to one direction (e.g., the +Y direction). For example, the display 203 may extend in an upward direction (e.g., the +Y direction), a rightward direction (e.g., the +X direction), a leftward direction (e.g., the -X direction), and/or a downward direction (e.g., the -Y direction) through a design change.

The state illustrated in FIG. 2A may be referred to as the closed state of the electronic device 101 or a housing 210, and the slide-in state of the display 203.

The state illustrated in FIG. 2B may be referred to as the open state of the electronic device 101 or the housing 210, and the slide-out state of the display 203.

Referring to FIGS. 2A and 2B, the electronic device 101 may include the housing 210. The housing 210 may include a first housing 202 and a second housing 202 disposed movably relative to the first housing 201. In an embodiment, the electronic device 101 may be interpreted as having a structure in which the first housing 201 is disposed to be slidable relative to the second housing 202. According to an embodiment, the second housing 202 may be disposed to reciprocate a certain distance relative to the first housing 201 in the illustrated direction, for example, in the direction indicated by arrow (1).

According to various embodiments, the second housing 202 may be referred to as a slide part or a slide housing, and may be movable relative to the first housing 201. According to an embodiment, the second housing 202 may accommodate various electrical and electronic components, such as circuit boards or batteries.

According to an embodiment, the first housing 202 may accommodate a motor, a speaker, a SIM socket, and/or a sub-circuit board electrically connected to a main circuit board. The second housing 201 may accommodate a main circuit board on which electrical components such as an application processor (AP), a communication processor (CP), etc. are mounted.

According to various embodiments, the first housing 201 may include a first cover member 211 (e.g., a main case). The first cover member 211 may include a (1-1)th side wall 211a, a (1-2)th side wall 211b extending from the (1-1)th side wall 211a, and a (1-3)th side wall 211c extending from the (1-1)th side wall 211a and substantially parallel to the (1-2)th side wall 211b. According to an embodiment, the (1-2)th side wall 211b and the (1-3)th side wall 211c may be formed substantially perpendicular to the (1-1)th side wall 211a.

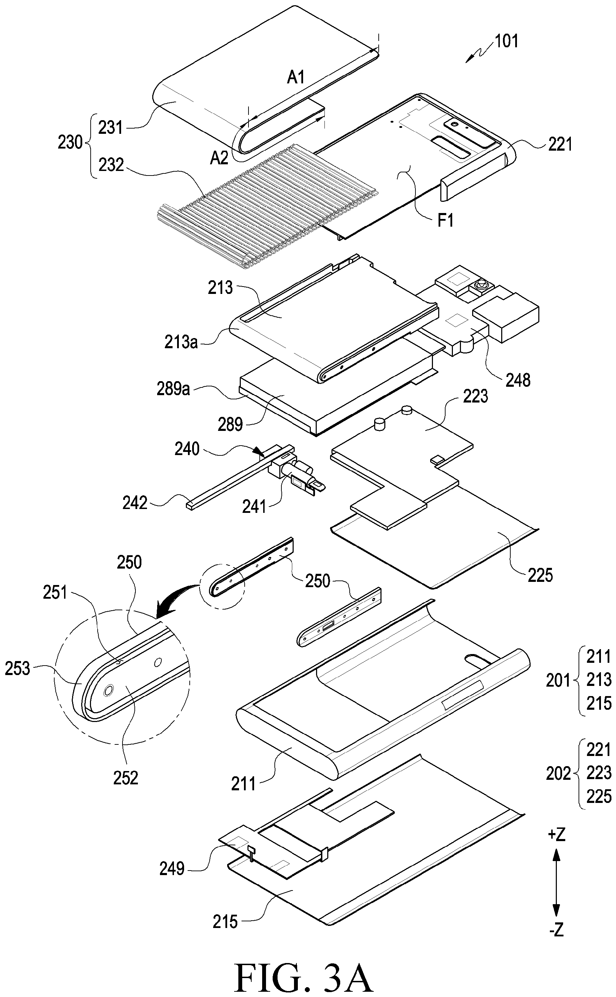

According to various embodiments, the (1-1)th side wall 211a, the (1-2)th side wall 211b, and the (1-3) side wall 211c of the first cover member 211 may be formed with one side (e.g., a front surface) open to accommodate (or surround) at least a portion of the second housing 202. For example, the at least portion of the second housing 202 may be surrounded by the first housing 201 and may slide in a direction parallel to a first surface (e.g., the first surface F1 in FIG. 3A), for example, in the direction of arrow (1) while being guided by the first housing 201. According to an embodiment, the (1-1)th side wall 211a, the (1-2)th side wall 211b, and/or the (1-3)th side wall 211c of the first cover member 211 may be integrally formed. According to an embodiment, the (1-1)th side wall 211a, the (1-2)th side wall 211b, and/or the (1-3)th side wall 211c of the first cover member 211 may be formed as separate structures and may be combined or assembled.

According to various embodiments, the first cover member 211 may be formed to surround at least a portion of the display 203. For example, the at least a portion of the display 203 may be formed to be surrounded by the (1-1)th side wall 211a, the (1-2) th side wall 211b, and/or the (1-3) th side wall 211c of the first cover member 211.

According to various embodiments, the second housing 202 may include a second cover member 221 (e.g., a slide plate). The second cover member 221 may be plate-shaped and may include the first surface (e.g., the first surface F1 in FIG. 3A) that supports internal components. For example, the second cover member 221 may support at least a portion (e.g., a first display region A1) of the display 203. According to an embodiment, the second cover member 221 may be referred to as a front cover.

According to an embodiment, the second cover member 221 may include a (2-1) th side wall 221a, a (2-2)th side wall 221b extending from the (2-1)th side wall 221a, and a (2-3)th side wall 221c extending from the (2-1)th side wall 221a and substantially parallel to the (2-2)th side wall 221b. According to an embodiment, the (2-2)th side wall 221b and the (2-3)th side wall 221c may be formed substantially perpendicular to the (2-1)th side wall 221a.

According to various embodiments, the second housing 202 may moves in a first direction (e.g., the direction of ①), parallel to the (1-2)th side wall 211b or the (1-2) side wall 211c, thereby forming an open state and a closed state of the housing 210. In the closed state, the second housing 202 may be positioned at a first distance from the (1-1)th side wall 211a, and in the open state, the second housing 202 may move to be positioned at a second distance from the (1-1)th side wall 211a wherein the second distance is greater than the first distance. In an embodiment, in the closed state, the first housing 201 may surround a portion of the (2-1)th side wall 221a.

According to various embodiments, the electronic device 101 may include the display 203, a key input device 245, a connector hole 243, audio modules 247a and 247b, or camera modules 249a and 249b. According to an embodiment, the electronic device 101 may further include an indicator (e.g., an LED device) or various sensor modules.

According to various embodiments, the display 203 may include a first display region A1 and a second display region A2 configured to be exposed to the outside of the electronic device 101 based on sliding of the second housing 202. According to an embodiment, the first display region A1 may be disposed on the second housing 202. For example, the first display region A1 may be disposed on the second cover member 221 of the second housing 202. According to an embodiment, the second display region A2 may extend from the first display region A1 and may be inserted into the first housing 201 (e.g., a slide-in state) or visually exposed to the outside of the electronic device 101 (e.g., a slide-out state) as the second housing 202 slides relative to the first housing 201.

According to various embodiments, the second display region A2 moves while being substantially guided by one region (e.g., the curved surface 213a in FIG. 3A) of the first housing 201, and may be inserted into a space positioned in the first housing 201 or exposed to the outside of the electronic device 101. According to an embodiment, the second display region A2 may move based on sliding of the second housing 202 in the first direction (e.g., the direction indicated by arrow ①). For example, during the sliding of the second housing 202, a portion of the second display region A2 may be deformed into a curved shape at a position corresponding to the curved surface 213a of the first housing 201.

According to various embodiments, when viewed from above the second cover member 221 (e.g., the front cover), as the housing 210 changes from a closed state to an open state (e.g., when the second housing 202 slides to extend from the first housing 201), the second display region A2 may gradually be exposed to the outside of the first housing 201, thereby substantially forming a flat surface together with the first display region A1. According to an embodiment, the display 203 may be coupled to or disposed adjacent to a touch detection circuit, a pressure sensor capable of measuring the intensity (pressure) of a touch, and/or a digitizer for detecting a magnetic stylus pen. According to an embodiment, regardless of whether the housing 210 is in a closed or open state, an exposed portion of the second display region A2 may be positioned on a portion (e.g., the curved surface 213a in FIG. 3A) of the first housing, and in a position corresponding to the curved surface 213a, a portion of the second display region A2 may maintain a curved shape.

According to various embodiments, the key input device 245 may be positioned in one region of the first housing 201. Depending on exterior appearance and usage state, the electronic device 101 may be designed such that the illustrated key input device 245 is omitted or additional key input device(s) is included. According to an embodiment, the electronic device 101 may include a key input device which has not been illustrated, for example, a home key button or a touch pad disposed around the home key button. According to an embodiment, at least a portion of the key input device 245 may be disposed on the 1-1st side wall 211a, the 1-2nd side wall 211b, and/or the 1-3rd side wall 211c of the first housing 201.

According to various embodiments, the connector holes 243 may be omitted according to embodiments, and may accommodate a connector (e.g., a USB connector) for transmitting and receiving power and/or data to and from an external electronic device. According to an embodiment (not shown), the electronic device 101 may include multiple connector holes 243, some of the multiple connector holes 243 may function as connector holes for transmitting and receiving audio signals to and from an external electronic device. In the illustrated embodiment, the connector hole 243 are positioned in the second housing 202. However, the disclosure is not limited thereto, and the connector holes 243 or a connector hole not illustrated may be positioned in the first housing 201.

According to various embodiments, the audio modules 247a and 247b may include at least one speaker hole 247a, or at least one microphone hole 247b. One of the speaker holes 247a may be provided as a receiver hole for voice calls, and another may be provided as an external speaker hole. The electronic device 101 may include a microphone for acquiring sound, and the microphone may acquire sound outside the electronic device 101 through the microphone hole 247b. According to an embodiment, the electronic device 101 may include multiple microphones to detect the direction of sound. According to an embodiment, the electronic device 101 may include an audio module in which the speaker hole 247a and the microphone hole 247b are implemented as a single hole, or may include a speaker without the speaker hole 247a (e.g., a piezo speaker).

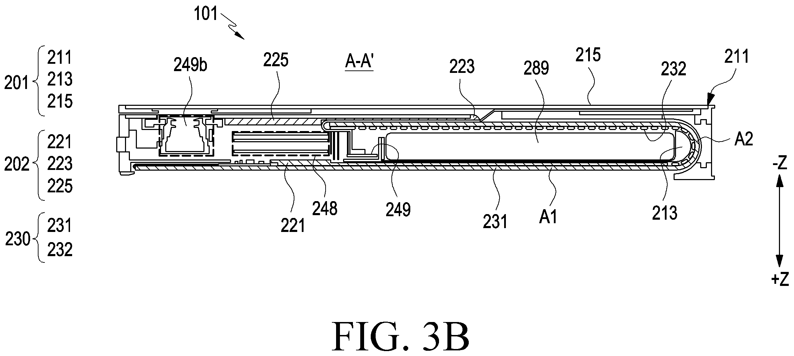

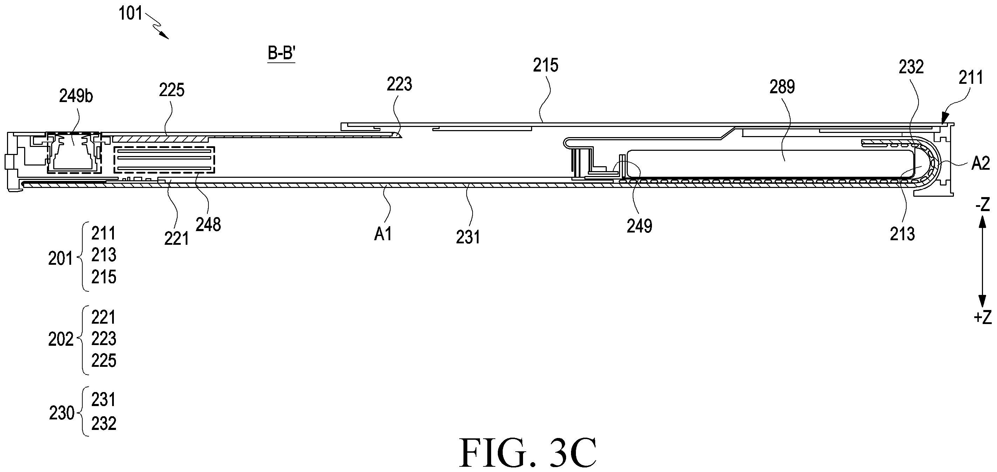

According to various embodiments, the camera modules 249a and 249b may include a first camera module 249a (e.g., a front camera) and a second camera module 249b (e.g., a rear camera) (e.g., the second camera module 249b in FIGS. 3B and 3C). According to an embodiment, the electronic device 101 may include at least one of a wide-angle camera, a telephoto camera, or a close-up camera, and according to an embodiment, may include an infrared projector and/or an infrared receiver to measure a distance to a subject. The camera modules 249a and 249b may include one or multiple lenses, an image sensor, and/or an image signal processor. The first camera module 249a may be disposed to face the same direction as the display 203. For example, the first camera module 249a may be disposed around the first display region A1 or in a region in which the first camera module 249a overlaps the display 203 and, when disposed in an area that overlaps with the display 203, the first camera module 249a may capture an image of a subject through the display 203. According to an embodiment, the first camera module 249a may not be visually exposed through a screen display region (e.g., the first display region A1) and may include a hidden under-display camera (UDC). According to an embodiment, the second camera module 249b may capture an image of a subject in an opposite direction to the first display region A1. According to an embodiment, the first camera module 249a and/or the second camera module 249b may be disposed on the second housing 202.

According to various embodiments, the indicator (not shown) of the electronic device 101 may be disposed in the first housing 201 or the second housing 202, and may include a light-emitting diode to provide state information of the electronic device 101 as a visual signal. The sensor module (not shown) of the electronic device 101 may generate electrical signals or data values corresponding to an internal operation state of the electronic device 101 or an external environmental state. The sensor module may include, for example, a proximity sensor, a fingerprint sensor, or a biometric sensor (e.g., an iris/face recognition sensor or an HRM sensor). In another embodiment, the sensor module may further include at least one of, for example, a gesture sensor, a gyro sensor, a barometric pressure sensor, a magnetic sensor, an acceleration sensor, a grip sensor, a color sensor, an infrared (IR) sensor, a temperature sensor, a humidity sensor, or a light sensor.

FIG. 3A is an exploded perspective view of an electronic device according to various embodiments of the disclosure. FIG. 3B is a cross-sectional view taken along line A-A' in FIG. 2A according to various embodiments of the disclosure. FIG. 3C is a cross-sectional view taken along line B-B' in FIG. 2B according to various embodiments of the disclosure.

Referring to FIG. 3A, FIG. 3B, and/or FIG. 3C, the electronic device 101 may include a first housing 201, a second housing 202, a display assembly 230, and a driving structure 240. The configuration of the first housing 201, the second housing 202, and the display assembly 230 in FIG. 3A, FIG. 3B, and/or FIG. 3C may be entirely or partially the same as the configuration of the first housing 201, the second housing 202, and the display 203 in FIG. 2A and/or FIG. 2B.

According to various embodiments, the first housing 201 may include a first cover member 211(e.g., the first cover member 211 in FIGS. 2A and 2B), a frame 213 and a first rear plate 215.

According to various embodiments, the first cover member 211 may accommodate at least a portion of the frame 213 and may accommodate a component (e.g., a battery 289) positioned on the frame 213. According to an embodiment, the first cover member 211 may be formed to surround at least a portion of the second housing 202. According to an embodiment, a second circuit board 249 accommodating electronic components (e.g., the processor 120 and/or the memory 130 in FIG. 1) may be connected to the first cover member 211.

According to various embodiments, the frame 213 may be connected to the first cover member 211. For example, the frame 213 may be connected to the first cover member 211, and the second housing 202 may be moved relative to the first cover member 211 and/or the frame 213. According to an embodiment, the frame 213 may accommodate the battery 289. According to an embodiment, the frame 213 may include a curved portion 213a that faces the display assembly 230.

According to various embodiments, the first rear plate 215 may substantially form at least a portion of the exterior of the first housing 201 or the electronic device 101. For example, the first rear plate 215 may be coupled to the outer surface of the first cover member 221. According to an embodiment, the first rear plate 215 may provide a decorative effect to the exterior of the electronic device 101. The first rear plate 215 may be manufactured using at least one of metal, glass, synthetic resin, or ceramic.

According to various embodiments, the second housing 202 may include a second cover member 221 (e.g., the second cover member 221 in FIGS. 2A and 2B), a rear cover 223, and a second rear plate 225.

According to an embodiment, the second cover member 221 may be connected to the first housing 201 via a guide rail 250, and may linearly reciprocate in one direction (e.g., the direction of arrow ① in FIG. 2B) while being guided by the guide rail 250.

According to various embodiments, the second cover member 221 may support at least a portion of the display 203. For example, the second cover member 221 may include a first surface F1, and a first display region A1 of the display 203 may be substantially positioned on the first surface F1 and maintained in a flat plate shape. According to an embodiment, the second cover member 221 may be formed of a metallic material and/or a non-metallic (e.g., polymer) material. According to an embodiment, a first circuit board 248 accommodating electronic components (e.g., the processor 120 and/or the memory 130 in FIG. 1) may be connected to the second cover member 221.

According to various embodiments, the rear cover 223 may protect a component (e.g., the first circuit board 248) positioned in the second cover member 221. For example, the rear cover 223 may be connected to the second cover member 221 and may be formed to surround at least a portion of the first circuit board 248. According to an embodiment, the rear cover 223 may include an antenna pattern for communicating with an external electronic device. For example, the rear cover 223 may include a laser direct structuring (LDS) antenna.

According to various embodiments, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 215 may be manufactured using at least one of metal, glass, synthetic resin, or ceramic.

According to various embodiments, the display assembly 230 may include a display 231 (e.g., the display 203 in FIG. 2A and/or FIG. 2B) and a multi-bar structure 232 configured to support the display 203. According to an embodiment, the display 231 may be referred to as a flexible display, a foldable display, and/or a rollable display.

According to various embodiments, the multi-bar structure 232 may be connected or attached to at least a portion (e.g., a second display region A2) of the display 231. According to an embodiment, as the second housing 202 slides, the multi-bar structure 232 may move relative to the first housing 201. In the closed state of the electronic device 101 (e.g., FIG. 2A), the multi-bar structure 232 may be mostly accommodated within the first housing 201 and may be positioned between the first cover member 211 and the second cover member 221. According to an embodiment, at least a portion of the multi-bar structure 232 may move to correspond to the curved surface 213a positioned at the edge of the frame 213. According to an embodiment, the multi-bar structure 232 may be referred to as a display support member or a support structure, and may be in the form of a single elastic plate.

According to various embodiments, a driving structure 240 may move the second housing 202 relative to the first housing 201. For example, the driving structure 240 may include a motor 241 configured to generate a driving force for sliding of the housings 201 and 202. The driving structure 240 may include a gear (e.g., a pinion) connected to the motor 241 and a rack 242 configured to mesh with the gear.

According to various embodiments, the housing in which the rack 242 is positioned may be different from the housing in which the motor 241 is positioned. According to an embodiment, the motor 241 may be connected to the second housing 202 and the rack 242 may be connected to the first housing 201. According to another embodiment, the motor 241 may be connected to the first housing 201 and the rack 242 may be connected to the second housing 202.

According to various embodiments, the first housing 201 may accommodate the first circuit board 248 (e.g., a main board). According to an embodiment, a processor, memory, and/or an interface may be mounted on the first circuit board 248. The processor may include one or more of, for example, a central processing unit, an application processor, a graphics processing unit, an image signal processor, a sensor hub processor, or a communications processor. According to various embodiments, the first circuit board 248 may include a flexible printed circuit board type radio frequency cable (FRC). The first circuit board 248 may be disposed on at least a portion of the second cover member 221 and may be electrically coupled to an antenna module and a communication module.

According to an embodiment, the memory may include, for example, volatile memory or non-volatile memory.

According to an embodiment, the interface may include, for example, a high-definition multimedia interface (HDMI), a universal serial bus (USB) interface, an SD card interface, and/or an audio interface. The interface may electrically or physically connect the electronic device 101 to an external electronic device, for example, and may include a USB connector, an SD card/MMC connector, or an audio connector.

According to various embodiments, the electronic device 101 may include the second circuit board 249 (e.g., a sub-circuit board) spaced apart from the first circuit board 248 (e.g., a main circuit board) in the first housing 201. The second circuit board 249 may be electrically connected to the first circuit board 248 via a connective flexible board. The second circuit board 249 may be electrically connected to electrical components disposed in the end region of the electronic device 101, such as the battery 289, a speaker and/or a SIM socket, so as to transmit signals and power. According to an embodiment, the second circuit board 249 may accommodate a wireless charging antenna (e.g., a coil). For example, the battery 289 may use a wireless charging antenna to receive power from an external electronic device. In another example, the battery 289 may use the wireless charging antenna to transmit power to an external electronic device.

According to various embodiments, the battery 289 is a device for supplying power to at least one element of the electronic device 101, and may include a non-rechargeable primary battery, a rechargeable secondary battery, or a fuel cell. The battery 289 may be integrally disposed in the electronic device 101, or may be detachably disposed in the electronic device 101. According to an embodiment, the battery 289 may be formed as a single integral battery or may include multiple separate batteries. According to an embodiment, the battery 289 may be positioned on the frame 213, and the battery 289 may be slid with the frame 213.

According to various embodiments, the guide rail 250 may guide the movement of the multi-bar structure 232. For example, the multi-bar structure 232 may slide along a slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or a recess formed in the inner surface of the guide rail 250.

According to various embodiments, the guide rail 250 may provide pressure to the multi-bar structure 233 based on driving of the motor 241.

According to an embodiment, when the electronic device 101 changes from a closed state to an open state, an inner portion 252 of the guide rail 250 may provide pressure to the multi-bar structure 232. The multi-bar structure 232 provided with pressure may move along the slit 251 of the guide rail 250, and the second housing 202 may change from a slide-in state to a slide-out state with respect to the first housing 201. At least a portion of the display assembly 230 that was accommodated between the first cover member 211 and the frame 213 may extend forward.

According to an embodiment, when the electronic device 101 changes from the open state to the closed state, an outer portion 253 of the guide rail 250 may provide pressure to the bent multi-bar structure 232. The multi-bar structure 232 provided with the pressure may move along the slit 251 of the guide rail 250, and the second housing 202 may change from the slide-out state to the slide-in state with respect to the first housing 201. The at least a portion of the display assembly 230 may be accommodated between the first cover member 211 and the frame 213.

Referring to FIG. 3B, when the electronic device 101 is in a closed state, at least a portion of the second housing 202 may be disposed to be accommodated in the first housing 201. As the second housing 202 is disposed to be accommodated in the first housing 201, the overall volume of the electronic device 101 may be reduced. According to an embodiment, when the second housing 202 is accommodated in the first housing 201, the size of the display 231 that is visually exposed may be minimized. For example, when the second housing 202 is fully accommodated in the first housing 201, a first display region A1 of the display 231 may be visually exposed and a second display region A2 may not be visually exposed. At least a portion of the second display region A2 may be disposed between the battery 289 and the rear plates 215, 225.

Referring to FIG. 3C, when the electronic device 101 is in an open state, at least a portion of the second housing 202 may protrude from the first housing 201. As the second housing 202 protrudes from the first housing 201, the overall volume of the electronic device 101 may increase. According to an embodiment, when the second housing 202 protrudes from the first housing 201, at least a portion of the second display region A2 of the display 231 may be visually exposed to the outside of the electronic device 101 along with the first display region A1.

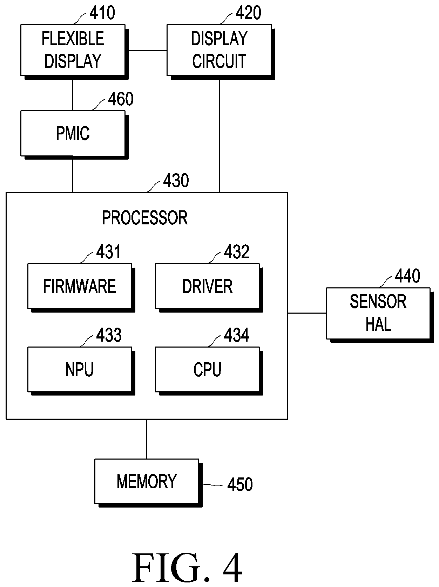

FIG. 4 is a block diagram of an electronic device (e.g., the electronic device 101 in FIG. 1) according to various embodiments of the disclosure.

Referring to FIG. 4, an electronic device according to various embodiments includes at least one among a flexible display 410, a display circuit 420, a processor 430, a current supply circuit 460, memory 450, and/or a sensor HAL 440 .

In the flexible display 410 (e.g., the display 210 in FIG. 2) according to various embodiments, the area of an externally exposed region may be changed by bending of a bending portion. Specifically, the flexible display 410 may include a flat portion, which is always exposed to the outside of the electronic device, and a bending portion, which has a partial region bending to be exposed to the outside of the electronic device or inserted into the electronic device. According to various embodiments, the flexible display 410 may be integrated with a touch screen panel (TSP) for receiving a touch input from a user.

In an embodiment, in the flexible display 410 of a rollable type, the area of an externally exposed region may be changed by a change in the area of a region inserted into a housing (e.g., the first housing 201 in FIG. 2), and a bendable bending portion may be inserted into the housing or withdrawn from inside the housing by movement of the flexible display 410. In another embodiment, the flexible display of a foldable type may have a fixed bendable bending portion.

The display circuit 420 according to various embodiments may be configured to provide sensing data corresponding to at least one electrode among multiple electrodes of the flexible display 410. The display circuit 420 may be a portion of a touch screen panel (TSP) for receiving a touch input from a user via the multiple electrodes.

The processor 430 according to various embodiments may include at least one of firmware, a driver, an NPU, or a CPU. The processor 430 may output information related to movement of the flexible display 410 to the device-level sensor HAL 440 based on sensing data received from the display circuit 420.

In an embodiment, a firmware 431 may be a micro-program that controls hardware stored in ROM, and is the same as software in terms of being a program, but is distinguished from ordinary application software in that firmware 431 has a close relationship with hardware. Thus, the firmware 431 may be hardware-oriented software having characteristics of both software and hardware. The firmware 431 may be connected to the flexible display 410 or the display circuit 420 connected thereto to receive sensing data corresponding to at least one electrode among the multiple electrodes of the flexible display 410, and may calibrate the received sensing data of the flexible display 410 to output a matrix of charge distributions of a driving electrode Tx and a receiving electrode Rx.

In an embodiment, a driver 432 may be installed with information containing the driving method, functions, and characteristics of hardware. The driver 432 may receive the matrix of charge distributions of the driving electrode Tx and the receiving electrode Rx output by the firmware 431 and may output information related to the movement of the flexible display 410 accordingly. Here, the driver 432 may be connected to a numeric processing unit (NPU) 433 or a central processing unit (CPU) 434 which has been trained by machine learning on information related to the movement of the flexible display according to sensing data corresponding to at least one electrode among the multiple electrodes of the flexible display 410, and may produce the information related to the movement of the flexible display 410 based on the matrix of charge distributions.

The NPU 433 or the CPU 434 may have an artificial intelligence (AI) neural network model which has been previously trained by machine learning on the information related to the movement of the flexible display 410 according to the sensing data corresponding to the at least one electrode among the multiple electrodes of the flexible display 410. The NPU 433 or the CPU 434 may receive a matrix of normalized charge distributions from the driver 432 and infer the information related to the movement of the flexible display 410 by using the artificial intelligence neural network model.

The memory 450 may be operably connected to the at least one processor 430, and may store data or commands regarding a program executed by the at least one processor 430.

The current supply circuit (PMIC) 460 (e.g., the power management module 188 in FIG. 1) may be operably connected to the at least one processor 430, and may supply a current to the flexible display 410. In an embodiment, the current supply circuit 460 may supply a current to the flexible display 410 via the multiple electrodes disposed in the flexible display 410. For example, the current supply circuit 460 may control the supply of a current to the flexible display 410 based on an operation signal from the at least one processor 430, and may receive a current from a battery (e.g., the battery 189 in FIG. 1) to supply the current to the flexible display 410.

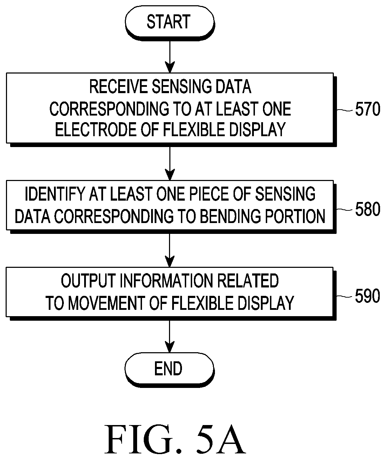

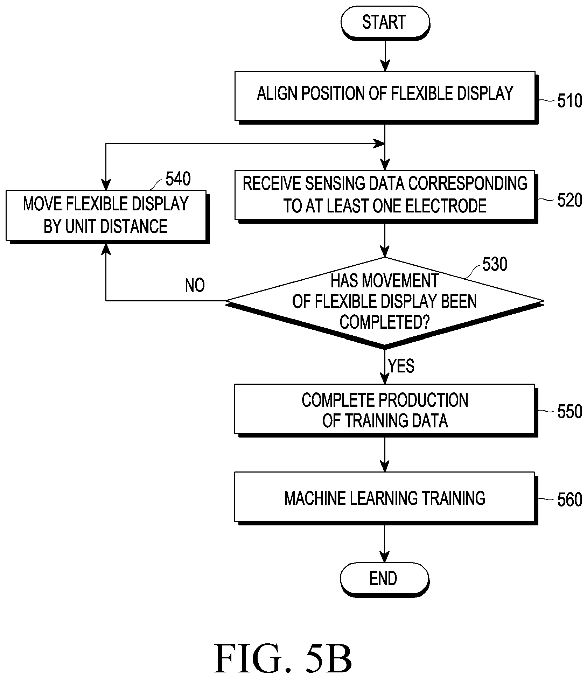

FIG. 5A is a flowchart of an operation method regarding outputting information related to the movement of an electronic device according to various embodiments of the disclosure. FIG. 5B is a flowchart of an operation method regarding machine learning training of an electronic device according to various embodiments of the disclosure.

Referring to FIGS. 5A and 5B, various embodiments according to the disclosure include an operation of outputting information related to movement of the flexible display 410, and an operation of conducting, to this end, machine learning training beforehand.

According to various embodiments, an electronic device (e.g., the processor 190 in FIG. 1) may receive, in operation 570, sensing data corresponding to at least one electrode among multiple (or, a plurality of) electrodes from a touch sensor of the flexible display 410. Specifically, the display circuit 420 may measure sensing data corresponding to at least one electrode in multiple (or, a plurality of) predetermined specific regions of the flexible display 410 from at least one touch sensor, and output the measured sensing data corresponding to the at least one electrode, and the processor 190 may receive the sensing data corresponding to the at least one electrode which has been output by the display circuit 420.

For example, the sensing data corresponding to the at least one electrode of the flexible display 410 that is received from the display circuit 420 may be data related to at least one of charge distribution or capacitance in the multiple predetermined specific regions of the flexible display 410, and the at least one touch sensor may measure the sensing data corresponding to the at least one electrode of the flexible display 410.

According to various embodiments, in operation 580, the electronic device (e.g., the processor 190 in FIG. 1) may identify at least one sensing data corresponding to the bending portion of the flexible display 410. Specifically, the processor 190 may determine at least one sensing data corresponding to the bending portion of the flexible display 410 and corresponding to a portion of the received sensing data corresponding to the at least one electrode which has been output from the display circuit 420.

According to various embodiments, in operation 590, the electronic device (e.g., the processor 190 in FIG. 1) may output information related to movement of the flexible display 410 based on the received sensing data corresponding to the at least one electrode of the flexible display 410. In an embodiment, the processor 190 may be configured to predict the information related to the movement of the flexible display 410 based on an artificial neural network (an AI model) which has been trained by machine learning on sensing data of the flexible display 410 according to the information related to the movement of the flexible display 410, as described later. The processor 190 may infer, based on the result of training the artificial neural network (the AI model), information related to the movement of the flexible display 410 with the highest likelihood (probability) based on the received sensing data of the flexible display 410. Here, the number of pieces of input data for the artificial neural network may be the number of at least one sensing data corresponding to the bending portion of the flexible display 410, and the number of pieces of output data for the artificial neural network may be the number of degrees of movement of the flexible display 410.

In another embodiment, the processor 190 may be configured to predict information related to the movement of the flexible display 410 from a received charge distribution in the flexible display 410, assuming that a negative charge relatively increases in a bent region of the bending portion. The processor 190 may predict information related to the movement of the flexible display 410 from the at least one sensing data corresponding to the bending portion of the flexible display 410, assuming that the flexible display 410 is bent in a position in which the negative charge has relatively increased.

For example, the information related to the movement of the flexible display 410, output by the processor 190, may include at least one of information about a distance that the second housing is moved relative to the first housing, information about a position of the bending portion of the flexible display 410, or information about a length by which the bending portion of the flexible display 410 is inserted into the first housing or withdrawn from inside the first housing. The information relating to the movement of the flexible display 410 is information about an externally exposed region of the flexible display 410 wherein the area of the externally exposed region changes depending on movement of the bending portion by a movement means (e.g., a motor), and may refer to the distance moved by the second housing relative to the first housing, for example, a movement distance moved by the flexible display 410 based on a state in which the flexible display 410 is fully extended or fully rolled up. In another embodiment, the information related to the movement of the flexible display 410 may be a position of the bending portion of the flexible display 410, which is moved while the bending portion is moved by the movement means (e.g., the motor), or a length by which the bending portion is inserted into the first housing or withdrawn from inside the first housing.

Additionally, the processor 190 or a separate device receiving the output information related to the movement of the flexible display 410 may adjust a screen displayed on the flexible display 410 based on the received information related to the movement of the flexible display 410.

According to various embodiments, in the electronic device (e.g., the processor 190), the artificial neural network (the AI model) may be trained by machine learning on sensing data of the flexible display 410 according to the information related to the movement of the flexible display 410. Here, the artificial neural network may use a convolutional neural network (CNN).

Specifically, according to various embodiments, in operation 510, the electronic device may align the position of the flexible display 410 to a predetermined position. In an embodiment, the flexible display 410 may be aligned to the predetermined position with the externally exposed area minimized or maximized. The electronic device may be equipped with a movement device (e.g., a motor) to move the position of the flexible display 410, and may use the movement device to move the flexible display 410.

According to various embodiments, in operation 520, the electronic device may receive sensing data of the flexible display 410. In an embodiment, the electronic device may receive data related to at least one of a charge amount or capacitance in multiple specific regions included the flexible display 410 which is measured in at least one electrode among multiple electrodes of the display circuit 420.

According to various embodiments, in operation 530, the electronic device may determine whether the movement of the flexible display 410 has been completed. While moving the flexible display 410, the electronic device may learn sensing data of the flexible display 410 for each piece of information related to the movement of the flexible display 410. Specifically, the electronic device may measure the sensing data of the flexible display 410 while the flexible display 410 is moved by a unit distance (e.g., 1 [mm]) from a predetermined position, and may determine whether the flexible display 410 has reached a position where the flexible display 410 cannot be moved further. When the movement of the flexible display 410 has not been completed, the electronic device may, in operation 540, move the flexible display 410 by a unit distance.

According to various embodiments, when the movement of the flexible display 410 has been completed, the electronic device may complete, in operation 550, generating data for training the AI model and may perform training based on machine learning in operation 560. In an embodiment, the training data may include multiple movement distances of the flexible display 410 and respective pairs of at least one sensing data of the bending portion corresponding to the multiple movement distances.

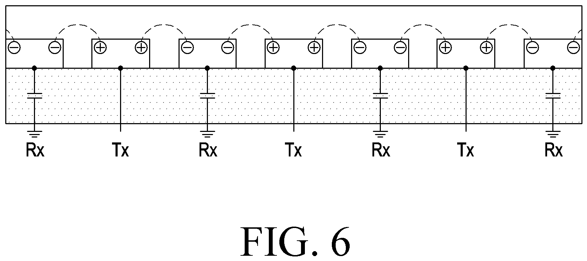

FIG. 6 illustrates charge flow in a touch screen panel according to various embodiments of the disclosure.

Referring to FIG. 6, a touch screen panel (e.g., the flexible display 410), such as a mobile phone, applies a charge to an electrode channel to recognize a user's touch, and when the user's touch occurs, recognizes the touch by observing the charge distribution in a driving channel TX and a receiving channel RX of the entire panel. More specifically, in a touch screen panel (TSP), a driving channel TX and a receiving channel RX are arranged to extend in a direction intersecting each other, and a touch sensor may receive a touch input by detecting a change in the capacitance or charge distribution between the two electrode channels TX and RX included in the touch screen panel.

Even in the absence of touch input, the charge flows in the touch screen panel, and as described later, when the panel is bent, capacitance or charge distribution in the bent curvature portion thereof is different from that in the flat state.

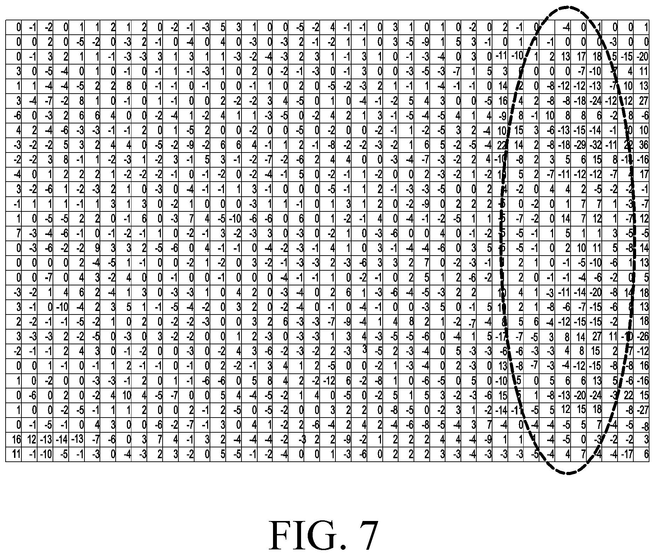

FIG. 7 illustrates a charge distribution in a display panel according to various embodiments of the disclosure.

Referring to FIG. 7, a charge distribution of a display panel (e.g., the flexible display 410) according to various embodiments may be normalized to have a charge value (a relative value) of 0 in a portion of the display panel unrolled as a flat surface. However, when the display panel is bent, as highlighted on the right side of the drawing, the amount of negative charge increases, allowing negative charge values to appear in the charge distribution of the display panel. Here, as bending of the display panel occurs between channels, trapped charges that are not dissipated may occur, resulting in the appearance of negative charge values.

By moving a display panel of a rollable form factor according to various embodiments and measuring the amount of charge in the display panel per movement distance, it may be observed that negative charges are generated in a bent portion, as illustrated. In an embodiment, the charge distribution of the display panel may be obtained by normalizing capacitance or charge distribution to a base line while the display panel is unrolled as a flat surface and measuring a relative value according to a change in the capacitance or the charge distribution due to the occurrence of a touch or bending relative to the base line. Here, the base line of the normalized capacitance or charge distribution may be updated in real time at predetermined time intervals or in response to the occurrence of specific events.

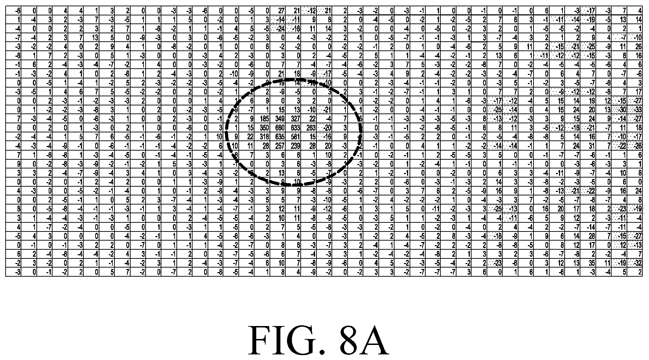

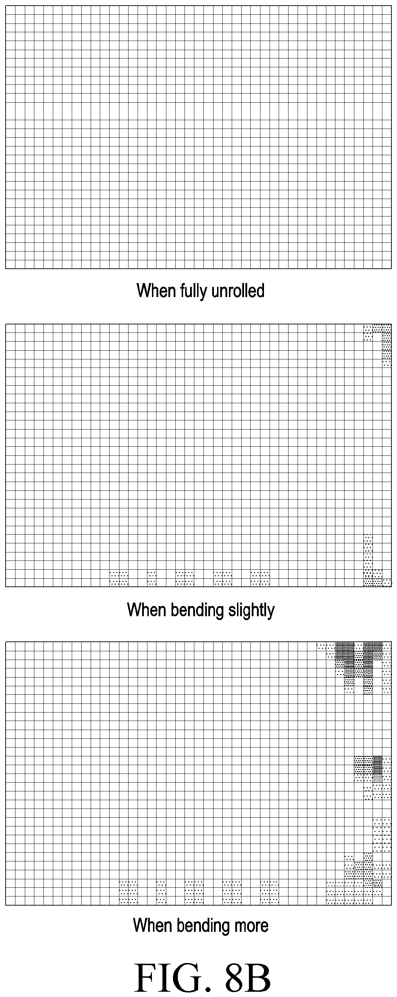

FIG. 8A illustrates a charge distribution in a display panel when a touch occurs according to various embodiments of the disclosure. FIG. 8B illustrates a charge distribution in a display panel when bending occurs according to various embodiments of the disclosure.

Display panels vary depending on manufacturers and models, but have a predetermined number of TX channels and RX channels. The panel used in the above experiment has 30 TX channels and 41 RX channels in a matrix form. In an embodiment, multiple TX channels and multiple RX channels extend alongside each other, and the TX channels and RX channels may extend in intersecting directions to form a matrix.

Referring to FIG. 8A, a charge distribution in a display panel (e.g., the flexible display 410) shows that when a portion is touched by a human hand, the amount of positive charge (highlighted in green) gradually increases from the center to the periphery of the touched portion. Here, the principle may be that when the display panel is touched, electrons are dissipated from the human hand, resulting in the appearance of relatively positive charge values.

Referring to FIG. 8B, a charge distribution in a display panel (e.g., the flexible display 410) may exhibit capacitance or charge distribution corresponding to a normalized base line in a fully unrolled state, and it may be identified that as the right portion is gradually bent, a region exhibiting a relatively negative charge amount compared to the base line gradually occurs. Thus, by identifying a bent region of the display panel based on the capacitance or charge distribution of the display panel, it is possible to identify information about a distance by which the display panel has been withdrawn to be exposed to the outside.

In the disclosure, in order to use experimental findings to sense the withdrawn movement distance of the display panel, raw data regarding the capacitance or charge distribution of the panel at each distance step may be extracted, and what the most probable withdrawn distance of the display panel according to a currently measured capacitance or charge distribution may be inferred based on a CNN AI model obtained by machine learning using the raw data as training data.

The disclosure has two processes of (1) extracting data on capacitance or charge distribution from a display panel to obtain a value of a withdrawal distance of the display panel through the computation of an AI model, and (2) before this, extracting and learning training data to be used as a reference for performing the computation of the AI model.

Start with the learning process in chronological order, in the process of training the AI model first, a rollable electronic device may be prepared, and then a motor is driven to align a display panel in a maximally unrolled state. In this case, measurement data obtained by measuring capacitance or charge distribution in the display panel may be stored as a file, and when the storage is completed, the motor may be moved by 1 mm to move the panel, and then capacitance or charge distribution in the panel may be measured. This process may be repeated until the panel moves to a point where the panel can no longer be moved. In this case, the reference of 1mm is a unit distance to be derived by the AI interference. For example, when a dump is made with movement of 1 mm each time, inference may be made per 1 mm, and when a dump is made with movement of 2 mm each time, the AI may infer a distance value per 2 mm. For example, this process may be repeated 300,000 times, which is enough for training the AI model.

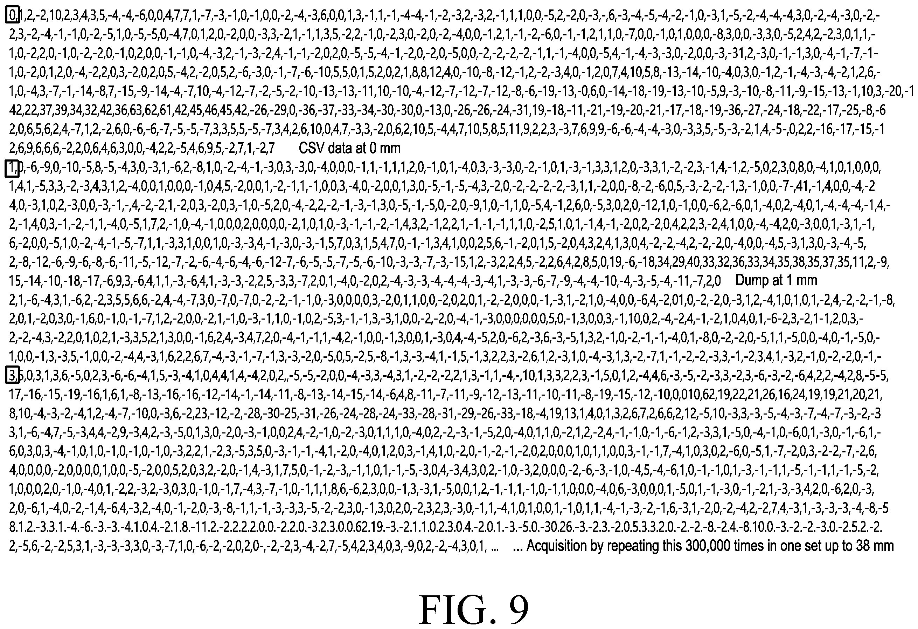

FIG. 9 illustrates charge distribution data of a display panel according to various embodiments of the disclosure.

Referring to FIG. 9, for example, when a panel moves from 0 mm to 38 mm in a rollable form factor, and when measurement data of capacitance or charge distribution in the panel for each movement distance is extracted 300,000 times while moving the display panel by a motor, the data may be completed in a count of 38 * 300,000 times. Here, the display panel is moved a sufficient number of times to obtain sufficient data for machine learning. For example, the data may be obtained by 300,000 iterations. When this value is used to train an AI model, the final trained AI model is generated. Then, the generated AI model is used to, when a user actually uses a device, receive a charge value of the display panel to infer a movement distance value. The measured data of capacitance or charge distribution may be in comma separated value (CSV) format.

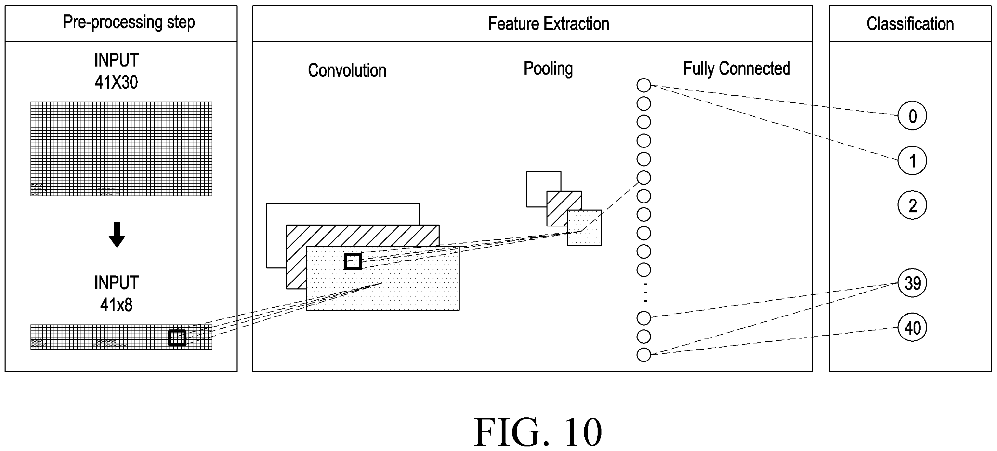

FIG. 10 sequentially illustrates the process of learning charge distribution data of a display panel according to various embodiments of the disclosure.

Referring to FIG. 10, at least one sensing data corresponding to the bending portion, among at least one sensing data of the flexible display 410, may be selected and learned. An AI model may first crop the matrix of capacitance or charge distribution in the panel received as an input value into an optimal size. For example, the received matrix (Input) of capacitance or charge distribution in the panel may have a size (41*30) corresponding to the product of the number of TX channels and the number of RX channels. In an embodiment, the AI model may be trained on only a charge distribution matrix corresponding to the bending portion selected from among the charge distribution matrix of the flexible display 410.

In the present patent, the optimal size of the charge distribution matrix to be cropped may be set as the following mathematical expression in a rollable form factor. Optimal size range = (0, maximum endpoint y coordiante)∼ (maximum x coordinate, y coordinate before instrument grabs display)

Here, it is assumed that the display panel is extended or reduced by being withdrawn or inserted in the y-axis direction, and the optimal size range may be the entire region in the x-axis direction and a region in which the display panel can be bent while moving in the y-axis direction (a region in which a bent region can move). The above optimal size range, which is coordinates corresponding to the bending portion of the panel, may exclude a point which may be touched by a user's hand or may act as noise in AI inference by external stimulation, thereby reducing the size of training data. Here, in an embodiment, the optimal size range of the matrix is set to a range of 41*8, and the matrix may be cropped.

Then, in a feature extraction step, a feature map may be formed by distinguishing regions through convolution. The convolution enables the formation of a feature map by applying a predetermined filter to the cropped matrix through a convolution computation. In pooling, the size of the formed feature map is reduced, thereby reducing the number of learning parameters. For example, in pooling, at least one of max pooling, average pooling, or sum pooling may be used.

Next, the AI model may be trained with training data by corresponding to known classes through a fully connected step. In this case, the classes may ultimately be mapped one-to-one to the panel's movement distance values in the present patent.

In an embodiment, the process of training an AI model may be performed during the development or fabrication process of an electronic device, and the electronic device (e.g., the processor 190) may include an NPU or a CPU in which the trained AI model is stored.

Finally, the process of obtaining the movement distance values of the panel based on the trained AI model is as follows.

First, TSP firmware may calibrate a value of charge flowing in a panel and transmit the charge value to a driver in a 1-by-1 matrix form according to Rx and TX, and the driver may normalize the matrix and transmit the normalized matrix to the NPU or the CPU which is to perform AI inference. As a result, a trained AI model may be formed in the NPU or the CPU.

Subsequently, the NPU may infer, based on the previously completed training data, a movement distance of the panel that best matches a currently measured matrix and may transmit the inferred movement distance back to the driver. Here, the NPU may predict information related to the movement of the flexible display 410 based on sensing data of the flexible display 410, among received sensing data of the flexible display 410, which corresponds to a portion of the flexible display 410 in which a bent bending portion can be moved by the movement of the flexible display 410. When the driver transmits a final movement distance value (0 mm - 38 mm) to the Android sensor Hal, sensing the movement distance of the panel may be completed.

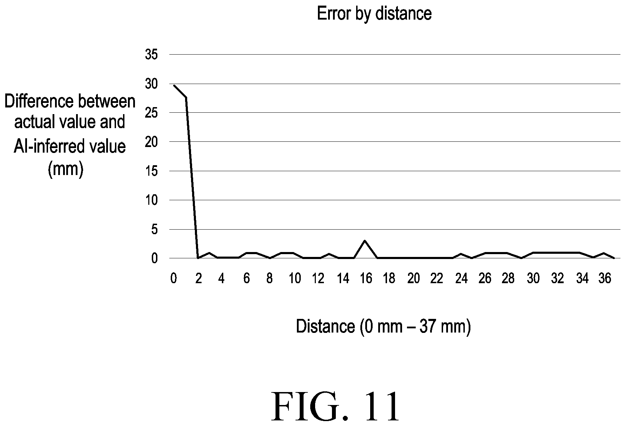

FIG. 11 illustrates a graph of prediction error per distance moved by a display panel according to various embodiments of the disclosure.

Referring to FIG. 11, the X-axis indicates distances moved by a display panel included in a rollable form factor. 0, closest to the origin, is the point where the display is fully unrolled, and an error between an actual distance and a value inferred by an AI for each point, up to a final point at 36 mm where the display is maximally rolled by rolling the display by 1 mm toward the right of the X-axis, is plotted on the Y-axis. Through the results, it can be seen that the actual value and the AI-inferred value exactly matched each other for most distances, and that even in some sections where inference failed, a position in which the display was rolled was accurately inferred with an error of less than 2 mm.

An electronic device including a flexible display, according to various embodiments, may include a first housing, a second housing disposed to be slidably movable relative to the first housing, a flexible display having a bending region and drawn-out from inside of the first housing or drawn-into the first housing based on a slide-in movement or a slide-out movement of the second housing, a current supply circuit configured to supply a current to the flexible display, a display circuit configured to measure data related to a charge of a surface of the flexible display, at least one processor, and at least one memory operably connected to the at least one processor, wherein the at least one processor is configured to identify at least one sensing data corresponding to the bending region among the data of the flexible display provided from the display circuit, and output information related to movement of the flexible display based on the at least one sensing data corresponding to the bending region.

In the electronic device according to various embodiments, the information related to the movement of the flexible display may include at least one of information of a distance moved by the second housing relative to the first housing, information of a position of the bending region of the flexible display, or information of a length by which the bending region of the flexible display is drawn-into the first housing or drawn-out from inside the first housing.

In the electronic device according to various embodiments, the bending region of the flexible display may include a plurality of predetermined specific regions.

The at least one sensing data corresponding to the bending region of the flexible display may include data related to at least one of charge distribution or capacitance of each of the plurality of specific regions.

In the electronic device according to various embodiments, the display circuit may include at least one touch sensor configured to measure at least one of the charge distribution or the capacitance of each of the plurality of specific regions.

In the electronic device according to various embodiments, the at least one processor may be configured to predict, based on a position in which a negative charge has relatively increased, the information related to the movement of the flexible display from the at least one sensing data corresponding to the bending region of the flexible display.

In the electronic device according to various embodiments, the at least one processor may be configured to predict the information related to the movement of the flexible display based on an artificial neural network trained by machine learning on the data related to the charge of the surface of the flexible display according to the information related to the movement of the flexible display.

In the electronic device according to various embodiments, the artificial neural network may use a convolutional neural network (CNN).

In the electronic device according to various embodiments, the training data for the artificial neural network may include a pair of a plurality of movement distances of the flexible display and of at least one sensing data of the bending region corresponding to each of the plurality of movement distances.

In the electronic device according to various embodiments, the artificial neural network may be trained on at least one sensing data corresponding to the bending region selected from among the data of the flexible display.

In the electronic device according to various embodiments, the number of pieces of input data for the artificial neural network may be the number of at least one sensing data corresponding to the bending region, and the number of pieces of output data for the artificial neural network may be the number of degrees of movement of the flexible display.

According to various embodiments, a method for operating an electronic device including a first housing, a second housing disposed to be slidably movable relative to the first housing, and a flexible display having a bending region and is drawn-out from inside the first housing or drawn-into the first housing based on a slide-in movement or a slide-out movement of the second housing may include receiving data related to a charge of a surface of the flexible display from a display circuit configured to measure the data, identifying at least one sensing data corresponding to the bending region among the data of the flexible display, and outputting information related to movement of the flexible display based on the at least one sensing data corresponding to the bending region.

According to various embodiments, in the method for operating the electronic device, the information related to the movement of the flexible display may include at least one of information of a distance moved by the second housing relative to the first housing, information of a position of the bending region of the flexible display, or information of a length by which the bending region of the flexible display is drawn-into the first housing or drawn-out from inside the first housing.

According to various embodiments, in the method for operating the electronic device, the bending region of the flexible display may include a plurality of predetermined specific regions, and the at least one sensing data corresponding to the bending region of the flexible display may include data related to at least one of charge distribution or capacitance of each of the plurality of specific regions.

According to various embodiments, in the method for operating the electronic device, as at least a part of the receiving of the sensing data, at least one of the charge distribution or the capacitance of each of the plurality of specific regions, measured by at least one touch sensor, may be received.

According to various embodiments, in the method for operating the electronic device, as at least a part of the outputting of the information related to the movement of the flexible display, the information related to the movement of the flexible display may be predicted, based on a position in which a negative charge has relatively increased, from the at least one sensing data corresponding to the bending region of the flexible display.

According to various embodiments, the method for operating the electronic device may further include training an artificial neural network by machine learning on the data related to the charge of the surface of the flexible display according to the information related to the movement of the flexible display, wherein as at least a part of the outputting of the information related to the movement of the flexible display, the information related to the movement of the flexible display may be predicted based on the artificial neural network trained by the machine learning.

According to various embodiments, in the method for operating the electronic device, the artificial neural network may use a convolutional neural network (CNN).

According to various embodiments, in the method for operating the electronic device, the training data for the artificial neural network may include a pair of a plurality of movement distances of the flexible display and at least one sensing data of the bending region corresponding to each of the plurality of movement distances.

According to various embodiments, in the method for operating the electronic device, as at least a part of the training by the machine learning, the artificial neural network may be trained on at least one sensing data corresponding to the bending region selected from among the data of the flexible display.

According to various embodiments, in the method for operating the electronic device, the number of input data for the artificial neural network may be the number of at least one sensing data corresponding to the bending region, and the number of output data for the artificial neural network may be the number of degrees of movement of the flexible display.

## Claims

1. An electronic device comprising:
a first housing;
a second housing disposed to be slidably movable relative to the first housing;
a flexible display having a bending region and drawn-out from inside of the first housing or drawn-into the first housing based on a slide-in movement or a slide-out movement of the second housing;
a current supply circuit configured to supply a current to the flexible display;
a display circuit configured to measure data related to a charge of a surface of the flexible display;
at least one processor; and
at least one memory operably connected to the at least one processor,
wherein the at least one processor is configured to:
identify at least one sensing data corresponding to the bending region among the data of the flexible display provided from the display circuit; and
output information related to movement of the flexible display based on the at least one sensing data corresponding to the bending region.

2. The electronic device of claim 1, wherein the information related to the movement of the flexible display comprises at least one of information of a distance moved by the second housing relative to the first housing, information of a position of the bending region of the flexible display, or information of a length by which the bending region of the flexible display is drawn-into the first housing or drawn-out from inside the first housing.

3. The electronic device of claim 1, wherein the bending region of the flexible display comprises a plurality of predetermined specific regions, and
wherein the at least one sensing data corresponding to the bending region of the flexible display comprises data related to at least one of charge distribution or capacitance of each of the plurality of specific regions.

4. The electronic device of claim 3, wherein the display circuit comprises at least one touch sensor configured to measure at least one of the charge distribution or the capacitance of each of the plurality of specific regions.

5. The electronic device of claim 1, wherein the at least one processor is configured to predict, based on a position in which a negative charge has relatively increased, the information related to the movement of the flexible display from the at least one sensing data corresponding to the bending region of the flexible display.

6. The electronic device of claim 1, wherein the at least one processor is configured to predict the information related to the movement of the flexible display based on an artificial neural network trained, by machine learning, on the data related to the charge of the surface of the flexible display according to the information related to the movement of the flexible display.

7. The electronic device of claim 6, wherein the artificial neural network is configured to use a convolutional neural network (CNN).

8. The electronic device of claim 6, wherein the training data for the artificial neural network comprises a pair of a plurality of movement distances of the flexible display and at least one sensing data of the bending region corresponding to each of the plurality of movement distances.

9. The electronic device of claim 6, wherein the artificial neural network is trained on at least one sensing data corresponding to the bending region selected from among the data of the flexible display.

10. The electronic device of claim 6, wherein the number of input data for the artificial neural network is the number of at least one sensing data corresponding to the bending region, and
wherein the number of output data for the artificial neural network is the number of degrees of movement of the flexible display.

11. A method for operating an electronic device comprising: a first housing; a second housing disposed to be slidably movable relative to the first housing; and a flexible display having a bending region and drawn-out from inside the first housing or drawn-into the first housing based on a slide-in movement or a slide-out movement of the second housing,
the method comprising:
receiving data related to a charge of a surface of the flexible display from a display circuit configured to measure the data;
identifying at least one sensing data corresponding to the bending region among the data of the flexible display; and
outputting information related to movement of the flexible display based on the at least one sensing data corresponding to the bending region.

12. The method of claim 11, wherein the information related to the movement of the flexible display comprises at least one of information of a distance moved by the second housing relative to the first housing, information of a position of the bending region of the flexible display, or information of a length by which the bending region of the flexible display is drawn-into the first housing or drawn-out from inside the first housing.

13. The method of claim 11, wherein the bending region of the flexible display comprises a plurality of predetermined specific regions,
wherein the at least one sensing data corresponding to the bending region of the flexible display comprises data related to at least one of charge distribution or capacitance of each of the a plurality of specific regions, and
wherein as at least a part of the receiving of the sensing data, at least one of the charge distribution or the capacitance of each of the a plurality of specific regions, measured by at least one touch sensor, is received.

14. The method of claim 11, wherein as at least a part of the outputting of the information related to the movement of the flexible display, the information related to the movement of the flexible display is predicted, based on a position in which a negative charge has relatively increased, from the at least one sensing data corresponding to the bending region of the flexible display.

15. The method of claim 11, further comprising training an artificial neural network by machine learning on the data related to the charge of the surface of the flexible display according to the information related to the movement of the flexible display,
wherein as at least a part of the outputting of the information related to the movement of the flexible display, the information related to the movement of the flexible display is predicted based on the artificial neural network trained by the machine learning.
